# EUROPEAN PATENT APPLICATION

(11) **EP 0 947 980 A1**
(43) Date of publication of application: **06.10.1999**
(21) Application number: 99106687.9
(22) Date of filing: 01.04.1999
(51) Int. Cl.: G10L 5/06

(54) **Noise-rejecting speech recognition system and method**

(30) Priority: 02.04.1998 JP 9034098
(71) Applicant: NEC CORPORATION, Tokyo (JP)
(72) Inventor: Tsukada, Satoshi, Minato-ku, Tokyo (JP); Tomooka, Yasuo, c/o NEC Robotics Engineering, Ltd., Yokohama-shi, Kanagawa (JP)
(74) Representative: VOSSIUS & PARTNER

(57) **Abstract**

A speech inputting section (4) inputs a speech of voice of a person utilizing a speed recognition system or of noise generated at the nearby area and outputs a speech signal. A word dictionary section (1) comprises a speech word storage section (2) for storing speech word data and a noise word storage section (3) for storing noise word data and outputs dictionary data. A standard pattern storage section (7) outputs standard pattern data. A speech recognizing section (6) implements a recognition process of the input speech signal by the dictionary data from the word dictionary section and the standard pattern data and outputs speech recognition data. Receiving the speech recognition data, a speech recognition outputting section (5) outputs a speech recognition result.

## Description

The present invention relates to a speech recognition noise removing scheme and more particularly to a speech recognition noise removing system and a speech recognition noise removing method for preventing erroneous recognition caused by a noise generated at the nearby area in recognizing a speech.

Because anyone can simply use a computer input by means of speech recognition, it is drawing attention as a natural input interface lately. With the advent of the multi-media era in particular, the role of the human interface which is the contact point between the human and a computer is becoming important more and more. A keyboard, a mouse, a touch panel and pen-input have been used in the past as means for transmitting information from the human to the computer. Graphics, a color image, a speech, a melody and others are used in addition to characters outputted on a CRT to transmit information from the computer to the human. Thus, the human interface is being improved steadily.

A speech recognition apparatus plays an important role as input means for making a natural conversation between the human and the computer.

There has been known a "speech recognition processing system" (hereinafter called a related art) described in Japanese Unexamined Patent Publication (JP-A) Sho 59-034595 as one example of such speech recognition.

According to the related art, the speech recognition is carried out the following process. The comparison is made between speech information inputted by a specific speaker and speech information of vocal words of the specific speaker whose pattern has been registered in a pattern dictionary in advance. The identification is performed between a pattern of a noise generated during the input and noise patterns within the pattern dictionary. Finally the pattern dictionary is selected, the dictionary containing a noise pattern whose distance is closest to the pattern of the noise generated during the input.

Thus, in a conventional speech recognition noise removing scheme, the result of comparison of each word pattern in the word dictionary with the input speech is represented by distance and a word whose distance is the shortest among all of the word patterns is outputted as a recognition result.

However, when the input speech is a noise at the nearby area and when there is a word whose distance is short as a result of recognition with words registered in the word dictionary, that word is erroneously recognized and outputted as a recognition result. Therefore, there has been a case when the ambient noise is recognized even though the user has made no speech, thus causing erroneous speech recognition.

Accordingly, it is an object of the present invention to provide a speech recognition noise removing scheme which can suppress erroneous recognition caused by a noise and whose recognition rate is high.

In order to achieve the above-mentioned object, an inventive speech recognition noise removing system comprises a word dictionary for registering a plurality of word groups while aiming at a word to be recognized and a noise word dictionary for registering a plurality of noise word groups close to a noise to be aimed. Then, the speech recognition noise removing system judges that an input speech is a noise when a recognition result of the speech is a word in the noise word group. Accordingly, the result of the speech recognition is not outputted as a result of speech recognition. The speech recognition noise removing system judges that an input speech is a normal speech when the recognition result is a word in the word dictionary and outputs a recognition result of the recognized speech.

A speech recognition noise removing system of the invention comprises a speech inputting section, a word dictionary section, a standard pattern storage section, a speech recognizing section and a speech recognition outputting section. The speech inputting section receives a speech including a noise and outputs a speech signal. The word dictionary section registers a plurality of speech word groups while aiming at a speech to be recognized and a plurality of noise word groups close to a noise while aiming at the noise and outputs the speech word group and the noise word group as dictionary data. The standard pattern storage section stores speech standard patterns and outputs standard pattern data. The speech recognizing section implements speech recognition on the speech signal based on the dictionary data and the standard pattern data to output speech recognition data as a recognition result when the speech signal is contained in the speech word group and outputs no recognition result when the speech signal is contained in the noise word group. The speech recognition outputting section outputs a speech recognition result based on the speech recognition data outputted from the speech recognizing section.

The word dictionary section comprises a speech word storage section for storing a plurality of speech word groups aimed at a word to be recognized and for outputting them as word data and a noise word storage section for storing a plurality of noise word groups which are close to a noise to be aimed and for outputting them as noise word data.

An inventive method for removing speech recognition noise comprises steps of registering a plurality of speech word groups aimed at a speech to be recognized; registering a plurality of noise word groups close to a noise to be recognized; judging that the input speech is a noise when the recognition result is a word within the noise word group; and judging that the input speech is a normal speech when the recognition result is a word within the speech word group.

The word dictionary section comprises a read-only memory for storing the word data and the noise word data in advance and a random access memory for storing the word data and the noise word data in inputting the speech.

The speech inputting section, the word dictionary section, the standard pattern storage section, the speech recognizing section and the speech recognition outputting section are composed of a microcomputer.

The speech inputting section, the word dictionary section, the standard pattern storage section, the speech recognizing section and the speech recognition outputting section are integrated into a monolithic structure.

The speech recognition outputting section outputs the speech recognition data as a speech. The speech recognition outputting section outputs the speech recognition data on a CRT as display data. The speech recognition outputting section transfers and outputs the speech recognition data as communication data.

The specific nature of the invention, as well as other objects, uses and advantages thereof, will clearly appear from the following description and from the accompanying drawings.
FIG. 1 is a block diagram showing first embodiment of this invention.
FIG. 2 is a flowchart showing an operation of the speech recognition noise removing system.

An embodiment of the present invention will be explained below with reference to the drawings.

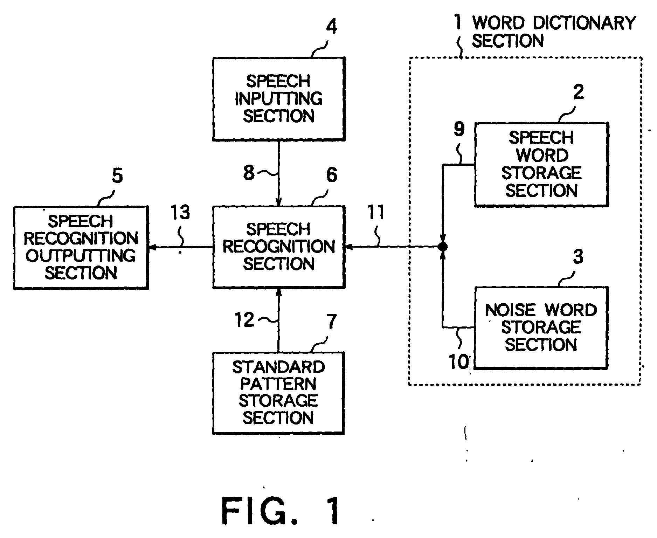

FIG. 1 is a block diagram showing first embodiment of a speech recognition noise removing system. As shown in FIG. 1, the speech recognition noise removing system comprises a speech inputting section 4, a word dictionary section 1, a standard pattern storage section 7, a speech recognizing section 6 and a speech recognition outputting section 5. The speech inputting section 4 receives a voice of a person using a speech recognition system or a noise generated at the nearby area and outputs a speech signal 8. The word dictionary section 1 comprises a speech word storage section 2 for storing speech word data 9 which is normal speech data for recognizing a speech and a noise word storage section 3 for storing noise word data 10 for recognizing a noise and outputs dictionary data 11. The standard pattern storage section 7 outputs standard pattern data 12. The speech recognizing section 6 implements speech recognition on the input speech signal 8 based on the dictionary data 11 from the word dictionary section 1 and the standard pattern data 12 and outputs speech recognition data 13. Receiving the speech recognition data 13, the speech recognition outputting section 5 outputs a speech recognition result.

The operation of the present embodiment will be explained below in detail with reference to FIG. 1.

A plurality of words to be recognized and generated in one time of speech are registered in the word dictionary section 1. The word dictionary section 1 comprises the speech word storage section 2 for registering the speech word data 9 for recognizing a normal speech and the noise word storage section 3 for registering the noise word data 10 which is close to a noise.

The speech word data 9 is a group of words in which a plurality of words to be recognized are registered. Groups of words which are the same with words actually voiced are registered in the word dictionary section 1. The noise word data 10 is a group of words in which a plurality of noise words which are close to a noise to be removed are registered. A plurality of noise words which are apt to be erroneously recognized are registered in the noise word storage section 3. The noise words are registered by recognizing the noise once and by registering necessary kinds of words from the speech environment and the similarity with the speech word data 9.

For instance, syllables such as "a" and "u" and words such as "aa" and "au" in which two such syllables are combined are registered at first in the speech word storage section 2 as the speech word data 9. After that, true noises such as the speech of things, the speech generated in turning over pages and the speech of footsteps are recognized and words recognized as a result are picked up to be registered in the noise word storage section 3 as the noise word data 10.

When the result of speech recognition is a word within the noise word storage section 3, the speech recognizing section 6 will judge that the recognized speech is a noise and outputs no recognition result. When the result of recognized speech is a word within the speech word storage section 2, the speech recognizing section 6 judges that it is recognized normally and outputs the speech recognition data 13 to the speech recognition outputting section 5.

The speech inputting section 4 converts and outputs speech (voice) to be recognized into the speech signal 8 of digital data by CODEC and others. The speech recognition outputting section 5 outputs the speech recognition data 13 outputted by the speech recognizing section 6 as a speech for example.

As described above, the speech recognizing section 6 recognizes the speech of the speech signal 8 by using the dictionary data 11 and the standard pattern data 12 and outputs its recognition result to the speech recognition outputting section 5 as the speech recognition data 13. The speech recognizing section 6 checks whether the recognition result of the speech signal 8 is a normal speech word registered in the speech word storage section 2 or a noise word registered in the noise word storage section 3. When the recognition result is the normal speech word registered in the speech word storage section 2, the speech recognizing section 6 outputs that recognition result to the speech recognition outputting section 5 as the result of speech recognition. When the recognition result is the noise word registered in the noise word storage section 3, the speech recognizing section 6 considers the input speech as a noise, nullifies that speech recognition result and outputs nothing to the speech recognition outputting section 5.

As a result, a host system or an application utilizing the result of the speech recognition outputting section 5 nullifies the recognition result which is considered to be the noise.

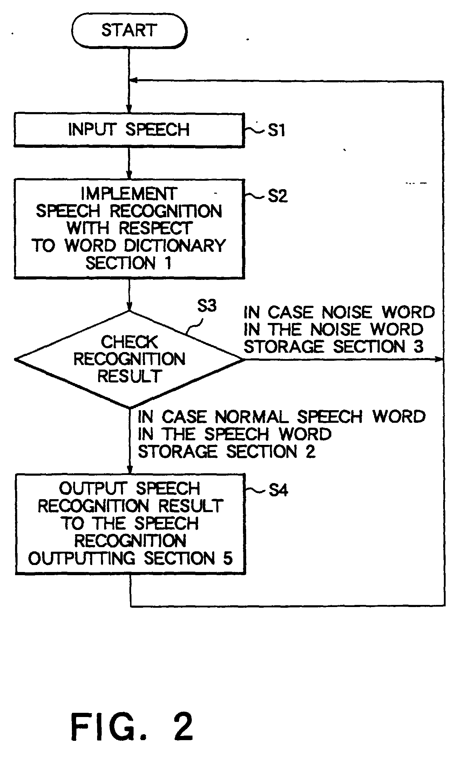

FIG. 2 shows a flowchart showing the operation of the speech recognition noise removing system. The operation from the input of speech to the output of the recognition result will be explained below with reference to FIG. 2.

When a speech is inputted in Step S1, the speech recognizing section 6 implements the speech recognition based on the word dictionary section 1 and the standard pattern storage section 7 and calculates any one of words registered in the word dictionary section 1 as a recognition result in Step S2.

Next, the speech recognizing section 6 judges whether the calculated recognition result is contained in the speech word storage section 2 within the word dictionary section 1 or in the noise word storage section 3 in Step S3. When the recognition result is a normal speech word contained in the speech word storage section 2, the speech recognizing section 6 outputs the recognition result to the speech recognition outputting section 5 as the result of speech recognition in Step S4. When the recognition result is a noise word contained in the noise word storage section 3 in Step S3 on the other hand, the speech recognizing section 6 outputs nothing and the process returns to Step S1 to wait for a speech to be inputted again.

The word dictionary section 1 is composed of a ROM for storing the speech word data 9 and the noise word data 10 in advance and a RAM which allows to write while inputting a speech. Standard patterns within the standard pattern storage section 7 are stored in the ROM in advance.

The speech inputting section 4, the speech recognition outputting section 5, the word dictionary section 1, the standard pattern storage section 7 and the speech recognizing section 6 may be integrated by a microcomputer, a gate array or a LSI composed of a CPU, a memory and an input/output I/O.

It is noted that the output of the speech recognition outputting section 5 may be a vocal output, an output displayed on a CRT screen, an output whose data is transferred via a communication equipment and the like.

As described above, the inventive speech recognition noise removing system registers the words close to noises in the word dictionary in advance and can judge whether a result recognized by the speech recognition is caused by a speech or a noise, so that it can suppress erroneous recognition caused by the noise and can improve the recognition rate.

While the preferred embodiment has been described, variations thereto will occur to those skilled in the art within the scope of the present inventive concepts which are delineated by the following claims.

## Claims

1. A speech recognition noise removing system comprising:
a word dictionary for registering a plurality of speech word groups aimed at speech words for recognizing a normal speech; and
a noise word dictionary for registering a plurality of noise word groups close to noises aimed at the noises;
said speech recognition noise removing system judging that an input speech is a noise when a recognition result of the speech is a word in said noise word group and said system outputting no recognition result data as a result of the recognition, said system judging that an input speech is a normal speech when said recognition result is a word in said word dictionary and outputting a recognition result of the recognized speech.

2. A speech recognition noise removing system, comprising:
a speech inputting section for inputting a speech including a noise and for outputting a speech signal;
a word dictionary section for registering a plurality of speech word grow composed of speech words for recognizing normal speeches aimed at a speech and a plurality of noise word groups composed of noise words for recognizing a noise close to a noise to be aimed, said section outputting said speech word group and said noise word group as dictionary data;
a standard pattern storage section to which speech standard patterns are stored for outputting standard pattern data
a speech recognizing section for recognizing said speech signal on the basis of said dictionary data and said standard pattern data to output speech recognition data as a recognition result when said speech signal is contained in said speech word group and to output no recognition result when said speech signal is contained in said noise word group; and
a speech recognition output section for outputting a speech recognition result in response to said speech recognition data from said speech recognizing section.

3. The speech recognition noise removing system as claimed in claim 2, wherein said word dictionary section comprises:
a speech word storage section for storing the plurality of speech word groups aimed at speech words for recognizing a speech to output the speech word group as word data; and
a noise word storage section for storing the plurality of noise word groups which are close to the noise aimed at the noise to output said noise word group as noise word data.

4. A method for removing speech recognition noise, comprising steps of:
registering a plurality of speech word groups composed of normal speech words for recognizing that speech aimed at that speech;
registering a plurality of noise word groups composed of noise words for recognizing a noise close to that noise aimed at a noise;
recognizing an input speech on the basis of said speech word group and said noise word group;
judging whether or not the recognition result recognized by the speech recognition is a word within said noise word group;
judging that said input speech is a noise when said recognition result is a word within said noise word group and returning to a state for waiting another speech to be inputted; and
judging that said input speech is a normal speech when said recognition result is a word within said speech word group and outputting a speech recognition result.

5. The speech recognition noise removing system as claimed in claim 3, wherein said word dictionary section comprises:
a read-only memory for storing said word data and said noise word data in advance ;and
a random access memory for storing said word data and said noise word data in inputting the speech.

6. The speech recognition noise removing system as claimed in claim 2, wherein said speech inputting section, said word dictionary section, said standard pattern storage section, said speech recognizing section and said speech recognition outputting section are composed of a microcomputer.

7. The speech recognition noise removing system as claimed in claim 2, wherein said speech inputting section, said word dictionary section, said standard pattern storage section, said speech recognizing section and said speech recognition outputting section are integrated into a monolithic structure.

8. The speech recognition noise removing system as claimed in any of claims 2, 6 or 7, herein said speech recognition outputting section outputs said speech recognition data as a speech.

9. The speech recognition noise removing system as claimed in any of claims 2, 6 or 7, wherein said speech recognition outputting section outputs said speech recognition data on a CRT as display data.

10. The speech recognition noise removing system as claimed in any of claims 2, 6 or 7, wherein said speech recognition outputting section outputs said speech recognition data as communication data.
